# EUROPÄISCHE PATENTANMELDUNG

(11) **EP 1 661 952 A2**
(43) Veröffentlichungstag der Anmeldung: **31.05.2006**
(21) Anmeldenummer: 05008309.6
(22) Anmeldetag: 15.04.2005
(51) Int. Cl.: C09C 1/00

(54) **Stabilisierte BiOCI-Pigmente**

(30) Priorität: 11.05.2004 DE 102004023075
(71) Anmelder: Merck Patent GmbH, 64293 Darmstadt (DE)
(72) Erfinder: Griessmann, Carsten, 64846 Gross-Zimmern (DE); Rathschlag, Thomas, 63762 Grossostheim (DE)

(57) **Zusammenfassung**

Die vorliegende Erfindung betrifft stabilisierte BiOCI-Pigmente, wobei BiOCl mit ein oder mehreren Polymeren und Oxiden, Oxidhydraten oder Hydroxiden des Siliciums beschichtet ist, Verfahren zur Herstellung der stabilisierten BiOCI-Pigmente und deren Verwendung.

## Beschreibung

Die vorliegende Erfindung betrifft stabilisierte BiOCI-Pigmente, wobei BiOCl mit ein oder mehreren Polymeren und Oxiden, Oxidhydraten oder Hydroxiden des Siliciums beschichtet ist, Verfahren zur Herstellung der stabilisierten BiOCl-Pigmente und deren Verwendung.

Bismutoxychlorid (BiOCl) war das erste synthetische, nichttoxische Perlglanzpigment überhaupt und ist mittlerweile einer der wichtigsten Vertreter aus der Gruppe der Perlglanzpigmente. Man stellt es durch Hydrolyse saurer Bismutsalzlösungen bei Anwesenheit von Chloridionen her. Der weiche Glanz und die physiologische Unbedenklichkeit haben BiOCl auch für die dekorative Kosmetik unentbehrlich gemacht. Die geringe Lichtstabilität (Grauwerden), das schnelle Absetzverhalten sowie. eine geringe mechanische Belastbarkeit sind die wesentlichsten Nachteile von BiOCl, die den Einsatz dieser Perlglanzpigmente in eine Reihe von Anwendungen einschränken oder gänzlich ausschließen.

Es hat eine Reihe von Versuchen gegeben, die Stabilität von BiOCl zu erhöhen. So beschreibt die EP 0 498 686 die Beschichtung von BiOCl mit Cer-Verbindungen um die Lichtstabilität zu erhöhen. Durch die Beschichtung mit Cer-Verbindungen wird aber die mechanische Stabilität nicht verbessert und der relativ hohe Preis von BiOCl wird durch den Zusatz teurer Cer-Verbindungen weiter erhöht, was den Einsatz dieser Pigmente zunehmend unattraktiv macht.

Aus der DE 26 03 211 sind pulverförmige Perlglanzpigment-Zubereitungen bekannt, bei denen Perlglanzpigmente, z.B. BiOCl, mit Polymeren umhüllt sind. Die beschriebenen Pigmente sind weniger empfindlich gegen mechanische Beanspruchung und können ohne weiter benötigtes Dispersionsmittel kostengünstig transportiert werden.

Die aus dem Stand der Technik bekannten BiOCl-Pigmente erweisen sich aber als nicht stabil genug gegenüber Einwirkung von Licht oder gegenüber mechanischer Belastung, weshalb auch weiterhin ein großer Bedarf an entsprechend stabilisierten BiOCl-Pigmenten besteht, die die oben genannten Nachteile nicht aufweisen.

Es bestand daher die Aufgabe BiOCl-Pigmente bereitzustellen, die lichtstabil, mechanisch stabil sind und nur eine geringe Neigung zur Agglomeration zeigen. Darüber hinaus sollen die BiOCl-Pigmente den für BiOCl charakteristischen Glanz aufweisen und universell einsetzbar sein, um den Anwendungsbereich von BiOCl auch auf andere Gebiete, wie z.B. technische Anwendungen, erweitern zu können.

Überraschenderweise werden die oben genannten Anforderungen von BiOCI-Pigmenten gemäß der vorliegenden Erfindung erfüllt. Gegenstand der vorliegenden Erfindung sind demgemäss stabilisierte BiOCI-Pigmente, wobei BiOCl mit ein oder mehreren Polymeren und Oxiden, Oxidhydraten oder Hydroxiden des Siliciums beschichtet ist. Weiterhin sind Gegenstand der vorliegenden Erfindung Verfahren zur Herstellung stabilisierter BiOCl-Pigmente, wobei BiOCl mit ein oder mehreren Polymeren und Oxiden, Oxidhydraten oder Hydroxiden des Siliciums beschichtet wird. Ebenfalls Gegenstand der vorliegenden Erfindung ist die Verwendung der erfindungsgemäßen Pigmente in Lacken, Wasserlacken, Pulverlacken, Farben, Druckfarben, Sicherheitsdruckfarben, Kunststoffen, Beton, in kosmetischen Formulierungen, in Agrarfolien und Zeltplanen, zur Lasermarkierung von Papieren und Kunststoffen, als Lichtschutz, sowie zur Herstellung von Pigmentpräparationen und Trockenpräparaten.

BiOCl-Pigmente gemäß der vorliegenden Erfindung haben den Vorteil, dass sie stabiler sind gegenüber jenen aus dem Stand der Technik. Die BiOCI-Pigmente sind stabiler gegenüber Licht und mechanischen Belastungen und können vielseitig in einer ganzen Reihe von Anwendungen eingesetzt werden. Die Polymere verhindern die Agglomeration der BiOCl-Kristalle und erlauben so die Erzeugung fester und rieselfähiger BiOCI-Präparate. Die erfindungsgemäßen BiOCl-Pigmente zeigen dabei keinen Glanzverlust und erzeugen den erwünschten Perlglanzeffekt in den Anwendungen. Durch die Oxide, Oxidhydrate oder Hydroxide des Siliciums werden die BiOCI-Pigmente weiter mechanisch stabilisiert. Darüber hinaus werden die BiOCI-Pigmente durch diese Materialien auch chemisch stabilisiert, das heißt, die Pigmente verhalten sich vornehmlich chemisch inert und können somit auch beispielsweise in sauren oder basischen Anwendungsmedien eingesetzt werden. Ein weiterer Vorteil ergibt sich für die Anwendung, da die erfindungsgemäßen Pigmente in rieselfähiger Darreichungsform zur Verfügung gestellt werden können.

Basis der erfindungsgemäßen BiOCl-Pigmente ist gefälltes BiOCl, vorzugsweise in der Form von plättchenförmigen oder nadelförmigen Kristallen, vorzugsweise liegt das eingesetzte BiOCl in der Form von Plättchen vor. Die Größe der Kristallpartikel ist an sich nicht kritisch und kann auf den jeweiligen Anwendungszweck abgestimmt werden. Die nadelförmigen Partikel sind 0.05 - 10 µm lang, vorzugsweise besitzen sie Längen von 0.05 - 5 µm, insbesondere von 0.05 - 1 µm. Geeignete Plättchen haben eine Dicke zwischen 0.02 und 5 µm, insbesondere zwischen 0.1 und 4.5 µm. Die Ausdehnung in den beiden anderen Raumrichtungen beträgt üblicherweise zwischen 1 und 500 µm, vorzugsweise zwischen 2 und 200 µm, und insbesondere zwischen 5 und 60 µm.

Auf das BiOCl sind ein oder mehrere Polymere und Oxide, Oxidhydrate oder Hydroxide des Siliciums aufgebracht. In einer bevorzugten Ausführungsform liegen separate Schichten aus ein oder mehreren Polymeren und Oxiden, Oxidhydraten oder Hydroxiden des Siliciums vor. Besonders bevorzugt ist ein Aufbau, bei dem auf BiOCl eine Schicht aus ein oder mehreren Polymeren und darauf eine Schicht aus Oxiden, Oxidhydraten oder Hydroxiden des Siliciums aufgebracht ist. BiOCl-Pigmente dieses Aufbaus erweisen sich als besonders stabil und gut geeignet für den Einsatz in anspruchsvollen Anwendungen. Darüber hinaus erleichtert die zuerst durchgeführte Aufbringung der ein oder mehreren Polymere die nachfolgende Beschichtung mit Oxiden, Oxidhydraten oder Hydroxiden des Siliciums, da die Polymerschicht eine Agglomeration der BiOCl-Partikel verhindert und eine Agglomeration während der nachfolgenden Beschichtung ebenfalls unterdrückt wird. Auch die optischen Eigenschaften der BiOCl-Pigmente, wie z.B. der Glanz, bleiben bei Wahl dieses Aufbaus am besten erhalten. Der Anteil der ein oder mehreren Polymere in den erfindungsgemäßen BiOCI-Pigmenten beträgt 5 bis 30 Gew.-%, vorzugsweise 5 bis 20 Gew.-% und besonders bevorzugt 10 bis 15 Gew.-%, bezogen auf das erfindungsgemäße BiOCI-Pigment.
Der Anteil der Oxide, Oxidhydrate oder Hydroxide des Siliciums beträgt 5 bis 30 Gew.-%, vorzugsweise 5 bis 25 Gew.-% und besonders bevorzugt 10 bis 20 Gew.-%, bezogen auf das erfindungsgemäße BiOCI-Pigment.

Als ein oder mehrere Polymere eignen sich grundsätzlich alle Polymere, die sich als Schichten auf BiOCl aufbringen lassen, insbesondere jene, die unlöslich sind. Unlösliche Polymere im Sinne der vorliegenden Erfindung. meint Polymere, die nach Aufbringung als Schicht unter den z.B. für die Aufbringung der Oxide, Oxidhydrate oder Hydroxide des Siliciums oder von weiteren zusätzliche Schichten nötigen Bedingungen unlöslich sind, das heißt, eine Wiederauflösung der Polymerschicht soll bei der Herstellung und Weiterverarbeitung der erfindungsgemäßen BiOCl-Pigmente weitestgehend ausgeschlossen werden. Dies gewährleistet die Stabilität der erfindungsgemäßen Pigmente. Beispielsweise kann es sich bei den ein oder mehreren Polymeren um Polyether, Polyacrylate, Polyvinylcaprolactame, Cellulose, Polystyrole, Polyvinylalkohole, Polyvinylpyrrolidone, Polyvinylacetate, Polysiloxane, LCST- oder UCST-Polymere, Polymere mit solvolysierbaren Gruppen, Derivate der genannten Polymere oder aus Mischungen hieraus handeln. Beispiele dieser Polymere sind dem Fachmann allgemein bekannt und können der hierfür gängigen Literatur entnommen werden. Eine Übersicht zu LCST- oder UCST-Polymeren findet sich beispielsweise in "Polymere", H.G. Elias, Hüthig und Wepf-Verlag, Zug, 1996 auf den Seiten 183 ff oder in WO 01/60926 und WO 03/014229, deren Offenbarungsgehalt hiermit unter Bezugnahme mit eingeschlossen ist.

Vorzugsweise handelt es sich bei den Polymeren um Polyacrylate mit Säurezahlen (NV) von 40-300 mg KOH, Glasübergangstemperaturen (TG/°C) von 40-200°C und Molekulargewichten (Mw) von 500-20.000 Dalton.

Als Oxide, Oxidhydrate oder Hydroxide des Siliciums eignen sich alle Vertreter dieser Klasse, wie z.B. Siliciumoxide oder Siliciumoxidhydrat, vorzugsweise handelt es sich um Siliciumdioxid.

In einer weiteren Ausführungsform können auf den BiOCI-Pigmenten zusätzlich eine oder mehrere Schichten aufgebracht sein. Die eine oder mehreren Schichten können Metalloxide, Metalloxidhydrate, Metallsuboxide, Metalle, Metallfluoride, Metallnitride, Metalloxynitride oder Mischungen dieser Materialien enthalten. Die Metalloxid-, Metalloxidhydrat, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle als Schichten aufzubringende Metalloxide oder Metalloxidhydrate, wie z. B. Aluminiumoxid, Aluminiumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf die erfindungsgemäßen BiOCl-Pigmente aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf den BiOCl-Pigmenten eine oder mehrere dieser Schichtpakete aufgebracht sein können. In einer weiteren Ausführungsform können die Metalloxid-, Metalloxidhydrat-, Metallsuboxid-, Metall-, Metallfluorid-, Metallnitrid-, Metalloxynitridschichten mit Farbmitteln oder anderen Elementen versetzt oder dotiert sein. Als Farbmittel oder andere Elemente eignen sich beispielsweise organische oder anorganische Farbpigmente wie farbige Metalloxide, z.B. Magnetit, Chromoxid oder Farbpigmente wie z.B. Berliner Blau, Ultramarin, Bismutvanadat, Thenards Blau, oder aber organische Farbpigmente wie z.B. Indigo, Azopigmente, Phthalocyanine oder auch Karminrot oder Elemente wie z.B. Yttrium oder Antimon. BiOCl-Pigmente enthaltend diese Schichten zeigen eine hohe Farbenvielfalt in bezug auf ihre Körperfarbe und können in vielen Fällen eine winkelabhängige Änderung der Farbe (Farbflop) durch Interferenz zeigen.

Die Dicke der Metalloxid-, Metalloxidhydrat-, Metallsuboxid-, Metall-, Metallfluorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

In ein weiteren Ausführungsform der vorliegenden Erfindung können die ein oder mehreren Polymere, die Oxide, Oxidhydrate oder Hydroxide des Siliciums und/oder die zusätzlichen ein oder mehreren Schichten absorbierende oder reflektierende Substanzen enthalten. Die absorbierenden oder reflektierenden Substanzen sind vorzugsweise aus der Gruppe der Farbmittel und/oder UV-Stabilisatoren bzw. UV-Schutzmittel ausgewählt, insbesondere der UV-Stabilisatoren bzw. UV-Schutzmittel. BiOCl-Pigmente enthaltend diese lichtabsorbierenden Substanzen können, im Falle von Farbmitteln, zusätzliche Farbeffekte zeigen. Im bevorzugten Falle des Einsatzes von UV-Stabilisatoren bzw. UV-Schutzmitteln zeigen die erhaltenen BiOCI-Pigmente eine erhöhte Stabilität gegenüber Licht, insbesondere gegenüber UV-Licht. Dies verhindert die unerwünschte Veränderung von BiOCl bei Bestrahlung und erhöht die Einsatzbreite der erfindungsgemäßen Pigmente, z.B. auch für den Außenbereich. Bevorzugt enthalten die ein oder mehreren Polymere die UV-Stabilisatoren bzw. UV-Schutzmittel.

Geeignete Farbmittel sind beispielsweise organische Pigmente aus der Color Index Liste, wie z.B. Monoazopigmente C.I. Pigmente Brown 25, C.I. Pigment Orange 5, 13, 36, 67, C.I. Pigment Red 1, 2, 3, 5, 8, 9, 12, 17, 22, 23, 31, 48 : 1, 48 : 2, 48 : 3, 48 : 4, 49, 49 : 1, 52 : 1, 52 : 2, 53, 53 : 1, 53 : 3, 57 : 1, 251, 112, 146, 170, 184, 210, und 245, C.I. Pigment Yellow 1, 3, 73, 65, 97, 151 und 183; Diazopigmente C.I. Pigment Orange 16, 34 und 44, C.I. Pigment Red 144, 166, 214 und 242, C.I. Pigment Yellow 12, 13, 14, 16, 17, 81, 106, 113, 126, 127, 155, 174, 176 und 188; Anthanthronpigmente C.I. Pigmente Red 168, Anthrachinonpigmente C.I. Pigment Yellow 147 und 177, C.I. Pigment Violet 31; Anthrapyrimidinpigmente C.I. Pigment Red 122, 202 und 206, C.I. Pigment Violet 19; Chinophthalonpigmente C.I. Pigment Yellow 138; Dioxazinpigmente C.I. Pigment Yellow 138; Dioxazinpigmente C.I. Pigmente Violet 23 und 37; Flavanthronpigmente C.I. Pigment Blue 60 und 64; Isoindolinpigmente C.I. Pigment Orange 69, C.I. Pigment Red 260, C.I. Pigment Yellow 139 und 185; Isoindolinonpigmente C.I. Pigment Orange 61, C.I. Pigment Red 257und 260, C.I. Pigment Yellow 109, 110, 173und 185; Isoviolanthronpigmente C.I. Pigment Violet 31, Metallkomplexpigmente C.I. Pigment Yellow 117 und 153, C.I. Pigment Green 8; Perinonpigmente C.I. Pigment Orange 43, C.I. Pigment Red 194; Perylenpigmente C.I. Pigment Black 31 und 32, C.I. Pigment Red 123, 149, 178 17j9, 190 und 224, C.I. Pigment Violet 29; Phthalocyanin-pigmente C.I. Pigment Blue 15, 15 : 1, 15 : 2, 15 : 3, 15 : 4, 15 : 6 und 16, C.I. Pigment Green 7 und 36; Pyranthronpigmente C.I. Pigment Orange 51, C.I. Pigment Red 216; Thioindigopigmente C.I. Pigment Red 88 und 181, C.I. Pigment Violet 38; Triarylcarboniumpigmente C.I. Pigment Blue 1, 61 und 62, C.I. Pigment Green 1, C.I. Pigment Red 81, 81 : 1 und 169, C.I. Pigment Violet 1, 2, 3 und 27; Anilinschwarz (C.I. Pigment Black 1); Aldazingelb (C.I. Pigment Yellow 101) sowie C.I. Pigment Brown 22 und Liquid Crystal Polymers (LCP-Pigmente).
Geeignete UV-Stabilisatoren sind dem Fachmann bekannt und im Handel erhältlich, wie z.B. UV-Absorber, UV-Reflektoren, UV-Streumittel, Antioxidantien, Rußpartikel, Radikalfänger, Mikrotitan.

Geeignete UV-Absorber sind beispielsweise Benzotriazole, Triazine, Oxanilide, Benzophenone, arylierte Cyanoacrylate, insbesondere Hydroxy-Benzotriazole so z.B. Phenylbenzidimidazol-5-sulfonsäure (Eusolex® 232), Benzophenon-5-Natriumsalz (Uvinul® MS 40 (BASF)), Terephthalyliden-Dicampher-Sulfonaäure (Mexoryl® SX (Chimex), Benzyliden-CampherSulfonsäure (Mexoryl® SL (Chimex), Disnatriumphenyldibenzmidazoltetrasulfonat (Neoheliopan® AP (Symrise), sowie wässrige Titandioxid -Dispersionen (Eusolex® T-aqua), 2-(3',5'-Bis-(1,1-dimethylbenzyl)-2'-hydroxy-phenyl)-benzotriazol, 2-(2'-Hydroxy-5'-(tert.-octyl)-phenyl)-benzotriazol, 2-(2'-Hydroxy-3'-(2-butyl)-5'-(tert.-butyl)-phenyl)-benzotriazol, Bis-(3-(2H-benzotriazolyl)-2-hydroxy-5-tert.-octyl)methan, 2-(4-Hexoxy-2-hydroxy-phenyl)-4,6-diphenyl-1,3,5-triazin, sowie das Benzophenon 2,4-Dihydroxy-benzophenon.

Geeignete UV-Absorber sind weiterhin Ruß und UV-Streumittel.

Als UV-Schutzmittel können ebenfalls Radikalfänger eingesetzt werden. Geeignete Radikalfänger sind z.B. organische und anorganische Nitroverbindungen, Phenole, wie z. B. Hydrochinone, kondensierte aromatische Verbindungen, Hindered Amines (HALS), wie z.B. [3-(2H-benzotriazol-2-yl)-5-(1,1-dimethylethyl)-4-hydroxyphenyl]-propionsäureisooctylester oder Decandisäure-bis(1,2,2,6,6-pentamethyl-4-piperidinyl)ester.

Bei den UV-reflektierenden Schutzmitteln sind insbesondere geeignet Metalle, Nanopartikel z.B. aus Titandioxid oder Eisenoxid, Titandioxid, Bariumsulfat. Unter Nanopartikein werden hier organische, anorganische, metallische Teilchen mit einer Größe von < 300 nm, vorzugsweise < 150 nm, verstanden.

Weiterhin können auch Gemische von unterschiedlichen UV-Schutzmitteln eingesetzt werden, wobei dem Mischungsverhältnis keine Grenzen gesetzt sind. Insbesondere Gemische bestehend aus Radikalfängern und Rußpartikeln sind bevorzugt.

Besonders bevorzugte UV-Stabilisatoren sind 2-Hydroxybenzophenone, 2-Hydroxyphenylbenztriazole, 2-Hydroxyphenyltriazine, Oxalanilide, Triazole, Triazine, Titandioxid-Nanopartikel, Eisenoxid-Nanopartikel, Ruß, Hindered Amines (HALS) sowie Gemische der genannten UV-Stabilisatoren.

Vorzugsweise enthalten die erfindungsgemäßen BiOCI-Pigmente 0.001 bis 1000 Gew. % der UV-Stabilisatoren bzw. UV-Schutzmittel, besonders bevorzugt 0.01 bis 500 Gew.% und insbesondere 0.1 bis 100 Gew. %, bezogen auf die Pigmente.

Ebenfalls Gegenstand der vorliegenden Erfindung sind Verfahren zur Herstellung der erfindungsgemäßen BiOCI-Pigmente, wobei BiOCl mit ein oder mehreren Polymeren und Oxiden, Oxidhydraten oder Hydroxiden des Siliciums beschichtet wird. Vorzugsweise wird auf BiOCl eine Schicht aus ein oder mehreren Polymeren und darauf eine Schicht aus Oxiden, Oxidhydraten oder Hydroxiden des Siliciums aufgebracht.

Vorzugsweise erfolgt die Beschichtung mit ein oder mehreren Polymeren durch Ausfällung in Wasser und/oder organischen Lösemitteln, durch Polykondensationsreaktionen, durch Polyadditionsreaktionen und/oder durch radikalische Polymerisation. Verfahren dieser Art sind bekannt und dem Fachmann gängig. Besonders bevorzugt ist die Ausfällung der ein oder mehreren Polymeren, das heißt der Einsatz von Polymerpräzipitationsverfahren. Namentlich sollen hier als Polymerpräzipitationsverfahren beispielsweise die Lower Critical Solution Temperature, die Upper Critical Solution Temperature und die Solvolyse-Technologie genannt werden.

Wird bei den erfindungsgemäßen Verfahren ein Lösemittel benötigt, so handelt es sich bei dem Lösemittel vorzugsweise um Wasser oder ein mit Wasser mischbares organisches Lösemittel. Zu den mit Wasser mischbaren Lösemitteln zählen auch solche Lösemittel, die Mischungslücken mit Wasser aufweisen. In diesen Fällen werden die Mengenverhältnisse so gewählt, dass Mischbarkeit vorliegt. Beispiele für geeignete Lösemittel sind Mono- und Polyalkohole wie z.B. Methanol, Ethanol, n-Propanol, Isopropanol, Glykol, Glycerin, Propylenglykol, Polyethylenglykol, Polybutylenglykol sowie die Mono- und Diether mit Methanol, Ethanol, Propanol und Butanol der Polyalkylenglykole, darüber hinaus Ether, wie z.B. Tetrahydrofuran, Dioxan, 1,2-Propandiolpropylether, 1,2-Butan-1-methylether, Ethylenglykolmonomethylether, Diethylenglykolmonomethylether. Weiterhin eignen sich Ester, wie z.B. Essigsäuremetyhlester, Monoester von Ethylenglykol oder Propylenglykol mit Essigsäure, Butyrolacton, aber auch Ketone, wie z.B. Aceton oder Methylethylketon oder Amide, wie z.B. Formamid, Dimethylformamid, Dimethylacetamind, N-Methylpyrrolidon und Hexamethylphosphorsäuretriamid, oder Sulfoxide und Sulfone, wie Dimethylsulfoxid und Sulfolan, und Alkancarbonsäuren wie Ameisensäure oder Essigsäure. Bevorzugte Lösemittel sind Wasser und Alkohole bzw. Glykole.

Die Beschichtung mit Oxiden, Oxidhydraten oder Hydroxiden des Siliciums kann nasschemisch, mittels Sol-Gel-Verfahren oder durch CVD- oder PVD-Verfahren erfolgen.
Bei der Beschichtung im Sol-Gel-Verfahren werden vorzugsweise Siliciumalkoxide in Form einer Lösung verwendet und die Siliciumalkoxide mit Wasser hydrolytisch zersetzt. Als bevorzugtes Siliciumalkoxid eignet sich Tetraalkoxysilan, insbesondere Tetraethoxysilan.

Vorzugsweise erfolgt eine nasschemische Aufbringung, z.B. durch Verwendung wässriger Sole und Lösungen. Ein bevorzugtes Beispiel ist die Abscheidung von Siliziumdioxid aus Wasserglas.

Die Beschichtung mit Oxiden, Oxidhydraten oder Hydroxiden kann auch über PVD- oder CVD-Verfahren erfolgen. Diese Verfahren sind aus der Literatur bekannt, z.B. aus US 3, 123, 489.

In einer weiteren Ausführungsform der erfindungsgemäßen Verfahren können zusätzlich eine oder mehrere Schichten nasschemisch, mittels Sol-Gel-Verfahren oder durch CVD- oder PVD-Verfahren aufgebracht werden. Die einsetzbaren Verfahren sind vorab genannt und können je nach Material ausgewählt und optimiert werden. Vorzugsweise erfolgt die Aufbringung, insbesondere bei Metalloxiden, nasschemisch.

Zusätzlich können in die ein oder mehreren Polymere, die Oxide, Oxidhydrate oder Hydroxide des Siliciums und/oder die zusätzlichen ein oder mehreren Schichten absorbierende oder reflektierende Substanzen eingebracht werden.

Die absorbierenden oder reflektierenden Substanzen, insbesondere UV-Schutzmittel bzw. UV-Stabilisatoren werden entweder direkt auf BiOCl aufgebracht und mit ein oder mehreren Polymeren, Oxiden, Oxidhydraten oder Hydroxiden des Siliciums und/oder den zusätzlichen ein oder mehreren Schichten immobilisiert oder in einem Schritt als Gemisch mit ein oder mehreren Polymeren, Oxiden, Oxidhydraten oder Hydroxiden des Siliciums und/oder den zusätzlichen ein oder mehreren Schichten auf die Oberfläche aufgebracht und immobilisiert. Vorzugsweise wird das UV-Schutzmittel zusammen mit einem immobilisierbaren Polymeren bzw. Polymerengemisch oder gemeinsam mit der SiO₂-Belegung, gegebenenfalls in Anwesenheit eines Lösemittels, aufgebracht. Geeignete Lösemittel sind bereits vorab genannt.

Selbstverständlich können die erfindungsgemäßen BiOCl-Pigmente kalziniert werden, wobei die Kalzinierung vorzugsweise nach Aufbringung der Oxide, Oxidhydrate oder Hydroxide des Siliciums oder der zusätzlichen ein oder mehreren Schichten erfolgt. Vorzugsweise erfolgt die Kalzinierung bei Temperaturen von 450 bis 600°C, insbesondere bei 500 bis 550°C, wobei die Dauer der Kalzinierung zwischen 10 bis 90 Minuten, insbesondere zwischen 20 bis 60 Minuten liegen kann. Durch die Kalzinierung wird die Stabilität der Pigmente; insbesondere gegenüber der Einwirkung von Feuchtigkeit, nochmals erhöht.

Die erfindungsgemäßen BiOCI-Pigmente sind vielseitig einsetzbar und können in Bereichen eingesetzt werden, bei denen die Verwendung von BiOCI-Pigmenten bislang nicht möglich war. Demgemäß ist die Verwendung der erfindungsgemäßen Pigmente in Lacken, Wasserlacken, Pulverlacken, Farben, Druckfarben, Sicherheitsdruckfarben, Kunststoffen, Beton, in kosmetischen Formulierungen, in Agrarfolien und Zeltplanen, zur Lasermarkierung von Papieren und Kunststoffen, als Lichtschutz, sowie zur Herstellung von Pigmentpräparationen und Trockenpräparaten ebenfalls Gegenstand der vorliegenden Erfindung.

Im Falle von Kosmetika eignen sich die erfindungsgemäßen BiOCl-Pigmente besonders für Produkte und Formulierungen der dekorativen Kosmetik, wie z.B. Nagellacke, farbgebende Puder, Lippenstifte oder Lidschatten, Seifen, Zahnpasten etc. Selbstverständlich können die erfindungsgemäßen BiOCI-Pigmente in den Formulierungen auch mit jeder Art von kosmetischen Roh- und Hilfsstoffen kombiniert werden. Dazu gehören u.a. Öle, Fette, Wachse, Filmbildner, Konservierungsmittel und allgemein anwendungstechnische Eigenschaften bestimmende Hilfsstoffe, wie z.B. Verdicker und rheologische Zusatzstoffe wie etwa Bentonite, Hektorite, Siliziumdioxid, Ca-Silikate, Gelatine, hochmolekulare Kohlenhydrate und/oder oberflächenaktive Hilfsmittel, etc. Die erfindungsgemäße BiOCI-Pigmente enthaltenden Formulierungen können dem lipophilen, hydrophilen oder hydrophoben Typ angehören. Bei heterogenen Formulierungen mit diskreten wässrigen und nicht-wässrigen Phasen können die erfindungsgemäßen Partikel in jeweils nur einer der beiden Phasen enthalten oder auch über beide Phasen verteilt sein.

Die pH-Werte der wässrigen Formulierungen können zwischen 1 und 14, bevorzugt zwischen 2 und 11 und besonders bevorzugt zwischen 5 und 8 liegen. Den Konzentrationen der erfindungsgemäßen BiOCI-Pigmente in der Formulierung sind keine Grenzen gesetzt. Sie können - je nach Anwendungsfall - zwischen 0,001 (rinse-off-Produkte, z.B. Duschgele) - 99 % (z.B. Glanzeffekt-Artikel für besondere Anwendungen bei Verwendung von Effektpigmenten als Substrat) liegen. Die erfindungsgemäßen BiOCI-Pigmente können weiterhin auch mit kosmetischen Wirkstoffen kombiniert werden. Geeignete Wirkstoffe sind z.B. Insect Repellents, UV A/BC-Schutzfilter (z.B. OMC, B3, MBC), Anti-Ageing-Wirkstoffe, Vitamine und deren Derivate (z.B. Vitamin A, C, E etc.), Selbstbräuner (z.B. DHA, Erythrolose u.a.) sowie weitere kosmetische Wirkstoffe wie z.B. Bisabolol, LPO, Ectoin, Emblica, Allantoin, Bioflavanoide und deren Derivate.

Bei Einsatz der BiOCI-Pigmente in Lacken und Farben sind alle dem Fachmann bekannten Anwendungsbereiche möglich, wie z.B. Pulverlacke, Automobillacke, Druckfarben für den Tief-, Offset-, Sieb- oder Flexodruck sowie für Lacke in Außenanwendungen. Für die Herstellung der Druckfarben ist eine Vielzahl von Bindern, insbesondere wasserlösliche Typen, geeignet, z.B. auf der Basis von Acrylaten, Methacrylaten, Polyestern, Polyurethanen; Nitrocellulose, Ethylcellulose, Polyamid, Polyvinylbutyrat, Phenolharzen, Maleinharzen, Stärke oder Polyvinylalkohol. Bei den Lacken kann es sich um wasser- oder lösemittelbasierte Lacke handeln, wobei die Auswahl der Lackbestandteile dem Allgemeinwissen des Fachmanns unterliegt. Vorzugsweise handelt es sich um wasserbasierte Lacksysteme, z.B. um Offset-Überdrucklacke.

Darüber hinaus können die erfindungsgemäßen BiOCI-Pigmente in Folien und Kunststoffen verwendet werden, so z.B. in Agrarfolien, infrarotreflektierende Folien und Scheiben, Geschenkfolien, Kunststoffbehältnissen und Formkörpern für alle dem Fachmann bekannten Anwendungen. Als Kunststoffe eignen sich alle gängigen Kunststoffe für die Einarbeitung der erfindungsgemäßen BiOCI-Pigmente, z.B. Duromere oder thermoplastische Kunststoffe. Die Beschreibung der Anwendungsmöglichkeiten und der einsetzbaren Kunststoffe, Verarbeitungsverfahren und Additive finden sich z.B. in der RD 472005 oder in R. Glausch, M. Kieser, R. Maisch, G. Pfaff, J. Weitzel, Perlglanzpigmente, Curt R. Vincentz Verlag, 1996, 83 ff., deren Offenbarungsgehalt hier mit umfasst ist.

Die erfindungsgemäßen BiOCl-Pigmente eignen sich in den oben genannten Anwendungsgebieten ebenso zur Verwendung in Abmischungen mit organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc. Die erfindungsgemäßen BiOCI-Pigmente können in jedem Verhältnis mit handelsüblichen Pigmenten und Füllern gemischt werden.

Als Füllstoffe sind z.B. natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z.B. plättchenförmig, sphärisch oder nadelförmig sein.

Die erfindungsgemäßen BiOCI-Pigmente sind weiterhin geeignet zur Herstellung von fließfähigen Pigmentpräparationen und Trockenpräparaten enthaltend ein oder mehrere erfindungsgemäße Partikel, Bindemittel und optional ein oder mehrere Additive. Unter Trockenpräparate sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pellets, Granulate, Chips, Würstchen oder Briketts vor und weisen Teilchengrößen von 0,2-80 mm auf. Die Trockenpräparate finden insbesondere Anwendung bei der Herstellung von Druckfarben und in kosmetischen Formulierungen.

Die nachfolgenden Beispiele sollen die Erfindung näher erläutern, ohne sie jedoch zu begrenzen.

### Beispiele:

### Beispiel 1:

### a) Belegung mit Polymer:

500g BiOCl (70%-ig in Wasser) werden mit 116.7g Styrolacrylatlösung (30%-ig in Wasser) enthaltend Styrolacrylate mit einem Molgewicht von 12.000 Dalton und einem pH-Wert von 8.4 versetzt. Der pH-Wert wird auf 8 eingestellt. Man erhält polymerbeschichtetes BiOCl.

### b) Belegung mit SiO₂:

145 g Natronwasserglas (27.6 %) werden mit 121.6 g Wasser auf einen Festkörpergehalt von 15 % verdünnt. Die erhaltene Natronwasserglaslösung wird zu 286 g des in a) erhaltenen Produktes in 1720 g Wasser bei 85°C zugegeben und 60 Minuten gerührt. Der pH wird während der Belegung mit HCl (20%) bei 7.5 gehalten. Zum vollständigen Abschluss der Reaktion wird 60 Minuten nachgerührt.

### c) Aufarbeitung:

Der Ansatz wird mit Wasser salzfrei gewaschen und über eine Nutsche trockengesaugt. Der erhaltene Filterkuchen wird in einem Vakuumtrockenschrank bis zur Massenkonstanz bei 65°C getrocknet und anschließend im Glühofen bei 500°C 30 Minuten kalziniert. Man erhält ein rieselfähiges glänzendes Präparat, das auch nach 12 Monaten kaum merkliche Trübungen oder Verlust des Perlglanzcharakters aufweist.

### d) Anwendung im Druckbereich:

40 g des in c) erhaltenen Produktes werden unter Rühren in eine wässrige Lösung von 15 g Wasser und 5 g AMP-75 (2-Amino-2-Methyl-1-Propanol; 75%-ig in Wasser) gegeben. Nach 20 Minuten werden 60 g wässriger Offset-Oberdrucklack Senolith WL Hochglanzlack 350081der Fa. Weilburger Graphics zugegeben und 10 Minuten weitergerührt. Die Viskosität der erhaltenen Druckfarbe wird durch Zugabe von Wasser eingestellt (ca. 20 s Auslaufzeit, gemessen im DIN-4-cup/23°C).

Angedruckt wird auf einem Tiefdruck-Labor-Andruckgerät des Typs Labratester der Fa.Schläfli/Schweiz. Es resultiert ein gleichmäßiger Ausdruck mit hohem Perlglanzcharakter.

### Beispiel 2:

### Schritte a) und b) siehe Beispiel 1.

### c) Belegung mit Fe₂O₃:

278 g Eisen(III)chlorid-Lösung (15.0%-ig) werden mit 122 g Wasser auf einen Eisengehalt von 10 % verdünnt. Die erhaltene Eisenlösung wird langsam zu 286 g des in b) erhaltenen Produktes in 1720 g Wasser bei 75°C zugegeben und 270 Minuten gerührt. Der pH wird während der Belegung mit NaOH (20%) bei 3.0 gehalten. Zum vollständigen Abschluss der Reaktion wird 30 Minuten nachgerührt.

### d) Aufarbeitung:

Der Ansatz wird mit Wasser salzfrei gewaschen und über eine Nutsche trockengesaugt. Der erhaltene Filterkuchen wird in einem Vakuumtrockenschrank bis zur Massenkonstanz bei 65°C getrocknet und anschließend im Glühofen bei 500°C 30 Minuten kalziniert. Man erhält ein rieselfähiges, bronzefarben glänzendes Präparat, das auch nach 12 Monaten kaum merkliche Trübungen oder Verlust des Perlglanzcharakters aufweist.

### e) Anwendung im Druckbereich:

40 g des in d) erhaltenen Produktes werden unter Rühren in eine wässrige Lösung von 15 g Wasser und 5 g AMP-75 (2-Amino-2-Methyl-1-Propanol; 75%-ig in Wasser) gegeben. Nach 20 Minuten werden 60g wässriger Offset-Überdruckiack Senolith WL Hochglanzlack 350081 der Fa. Weilburger Graphics zugegeben und 10 Minuten weitergerührt. Die Viskosität der erhaltenen Druckfarbe wird durch Zugabe von Wasser eingestellt (ca. 20 s Auslaufzeit, gemessen im DIN-4-cup/23°C).

Angedruckt wird auf einem Tiefdruck-Labor-Andruckgerät des Typs Labratester der Fa.Schläfli/Schweiz. Es resultiert ein gleichmäßiger Ausdruck mit hohem Perlglanzcharakter.

### Beispiel 3:

### Schritte a) und b) siehe Beispiel 1.

### c) Belegung mit Fe₂TiO₅:

286 g des in b) erhaltenen Produktes in 1720 g Wasser werden langsam auf 75°C erhitzt. Nach Erreichen der Temperatur werden 117.5 g Titantetrachloridlösung (25.3%) mit 257.4g Eisen(III)chloridlösung(15%-ig) gemischt und 8.8 g Aluminium(III)chloridlösung, vorgelöst in 225.3 g Wasser, mit weiteren 610 g Wasser vermischt und langsam zudosiert. Der pH-Wert wird während der Belegung durch Zugabe von NaOH (32%) bei 2.6 gehalten. Zum vollständigen Abschluss der Reaktion wird 30 Minuten nachgerührt.

### d) Aufarbeitung:

Der Ansatz wird mit Wasser salzfrei gewaschen und über eine Nutsche trockengesaugt. Der erhaltene Filterkuchen wird in einem Vakuumtrockenschrank bis zur Massenkonstanz bei 65°C getrocknet und anschließend im Glühofen bei 500°C 30 Minuten kalziniert. Man erhält ein rieselfähiges hoch glänzendes Präparat mit goldfarbener Interferenz, das nach 12 Monaten kaum merkliche Trübungen oder Verlust des Perlglanzcharakters aufweist.

### e) Anwendung im Druckbereich:

40 g des in d) erhaltenen Produktes werden unter Rühren in eine wässrige Lösung von 15 g Wasser und 5 g AMP-75 (2-Amino-2-Methyl-1-Propanol; 75%-ig in Wasser) gegeben. Nach 20 Minuten werden 60g wässriger Offset-Überdrucklack Senolith WL Hochglanzlack 350081der Fa. Weilburger Graphics zugegeben und 10 Minuten weitergerührt. Die Viskosität der erhaltenen Druckfarbe wird durch Zugabe von Wasser eingestellt (ca. 20 s Auslaufzeit, gemessen im DIN-4-cup/23°C).

Angedruckt wird auf einem Tiefdruck-Labor-Andruckgerät des Typs Labratester der Fa.Schläfli/Schweiz. Es resultiert ein gleichmäßiger Ausdruck mit hohem Perlglanzcharakter.

### Beispiel 4:

### Schritt a) siehe Beispiel 1.

### b) Belegung mit SiO₂ enthaltend einen UV-Absorber:

145 g Natronwasserglas (27.6 %) werden mit 121,6 g Wasser auf 15 % - Festkörper verdünnt. Die erhaltene Natronwasserglaslösung wird zu 286 g des in a) erhaltenen Produktes in 1720 g Wasser bei 75°C zugegeben und 60 Minuten gerührt. Der pH wird während der Belegung mit HCl (20%) bei 7.5 gehalten. Nach einer Nachrührzeit von 60 Minuten wird der Ansatz auf 30°C abgekühlt. 4 g Benzotriazol-UV-Absorber Tinuvin® 1130 (Fa. Ciba AG) in den vorliegenden Ansatz eingerührt. Der Ansatz wird mit Wasser salzfrei gewaschen und über eine Nutsche trockengesaugt. Der erhaltene Filterkuchen wird in einem Vakuumtrockenschrank bis zur Massenkonstanz bei 65°C getrocknet und anschließend im Glühofen bei 500°C 30 Minuten kalziniert. Man erhält ein rieselfähiges glänzendes Präparat.

## Patentansprüche

1. Stabilisierte BiOCI-Pigmente, **dadurch gekennzeichnet, dass** BiOCl mit ein oder mehreren Polymeren und Oxiden, Oxidhydraten oder Hydroxiden des Siliciums beschichtet ist.

2. BiOCI-Pigmente gemäß Anspruch 1, **dadurch gekennzeichnet, dass** separate Schichten aus ein oder mehreren Polymeren und Oxiden, Oxidhydraten oder Hydroxiden des Siliciums vorliegen.

3. BiOCI-Pigmente gemäß Anspruch 1 oder 2, **dadurch gekennzeichnet, dass** auf BiOCl eine Schicht aus ein oder mehreren Polymeren und darauf eine Schicht aus Oxiden, Oxidhydraten oder Hydroxiden des Siliciums aufgebracht ist.

4. BiOCI-Pigmente gemäß einem der Ansprüche 1 bis 3, **dadurch gekennzeichnet, dass** es sich bei den Oxiden, Oxidhydraten oder Hydroxiden des Siliciums um Siliciumdioxid handelt.

5. BiOCI-Pigmente gemäß einem der Ansprüche 1 bis 4, **dadurch gekennzeichnet, dass** es sich bei den ein oder mehreren Polymeren um Polyether, Polyacrylate, Polyvinylcaprolactame, Cellulose, Polystyrole, Polyvinylalkohole, Polyvinylpyrrolidone, Polyvinylacetate, Polysiloxane, LCST- oder UCST-Polymere, Polymere mit solvolysierbaren Gruppen, Derivate der genannten Polymere oder aus Mischungen hieraus handelt.

6. BiOCI-Pigmente gemäß einem der Ansprüche 1 bis 5, **dadurch gekennzeichnet, dass** zusätzlich eine oder mehrere Schichten aufgebracht sind.

7. BiOCI-Pigmente gemäß Anspruch 6, **dadurch gekennzeichnet, dass** die ein oder mehreren Schichten Metalloxide, Metalloxidhydrate, Metallsuboxide, Metalle, Metallfluoride, Metallnitride, Metalloxynitride oder Mischungen dieser Materialien enthalten.

8. BiOCI-Pigmente gemäß einem der Ansprüche 1 bis 7, **dadurch gekennzeichnet, dass** die ein oder mehreren Polymere, die Oxide, Oxidhydrate oder Hydroxide des Siliciums und/oder die zusätzlichen ein oder mehreren Schichten absorbierende oder reflektierende Substanzen enthalten.

9. BiOCl-Pigmente gemäß Anspruch 8, **dadurch gekennzeichnet, dass** die absorbierenden oder reflektierenden Substanzen ausgewählt sind aus der Gruppe der Farbmittel und/oder UV-Stabilisatoren bzw. UV-Schutzmittel.

10. Verfahren zur Herstellung von BiOCI-Pigmenten gemäß Anspruch 1,
**dadurch gekennzeichnet, dass** BiOCl mit ein oder mehreren Polymeren und Oxiden, Oxidhydraten oder Hydroxiden des Siliciums beschichtet wird.

11. Verfahren gemäß Anspruch 10, **dadurch gekennzeichnet, dass** auf BiOCl eine Schicht aus ein oder mehreren Polymeren und darauf eine Schicht aus Oxiden, Oxidhydraten oder Hydroxiden des Siliciums aufgebracht wird.

12. Verfahren gemäß Anspruch 10 oder 11, **dadurch gekennzeichnet**, die Beschichtung mit ein oder mehreren Polymeren durch Ausfällung in Wasser und/oder organischen Lösemitteln, durch Polykondensationsreaktionen, durch Polyadditionsreaktionen und/oder durch radikalische Polymerisation erfolgt.

13. Verfahren gemäß einem der Ansprüche 10 bis 12, **dadurch gekennzeichnet, dass** die Beschichtung mit Oxiden, Oxidhydraten oder Hydroxiden des Siliciums nasschemisch, mittels Sol-Gel-Verfahren oder durch CVD- oder PVD-Verfahren erfolgt.

14. Verfahren gemäß einem der Ansprüche 10 bis 13, **dadurch gekennzeichnet, dass** zusätzlich eine oder mehrere Schichten nasschemisch, mittels Sol-Gel-Verfahren oder durch CVD- oder PVD-Verfahren aufgebracht werden.

15. Verfahren gemäß einem der Ansprüche 10 bis 14, **dadurch gekennzeichnet, dass** in die ein oder mehreren Polymere, die Oxide, Oxidhydrate oder Hydroxide des Siliciums und/oder die zusätzlichen ein oder mehreren Schichten absorbierende oder reflektierende Substanzen eingebracht werden.

16. Verwendung der BiOCl-Pigmente gemäß Anspruch 1 in Lacken, Wasserlacken, Pulverlacken, Farben, Druckfarben, Sicherheitsdruckfarben, Kunststoffen, Beton, in kosmetischen Formulierungen, in Agrarfolien und Zeltplanen, zur Lasermarkierung von Papieren und Kunststoffen, als Lichtschutz, sowie zur Herstellung von Pigmentpräparationen und Trockenpräparaten.
